Europäisches Patentamt

European Patent Office

Office européen des brevets

(19)

(11) Veröffentlichungsnummer: **0 147 590**

A2

# (12) EUROPÄISCHE PATENTANMELDUNG

(21) Anmeldenummer: **84113588.2**

(22) Anmeldetag: **10.11.84**

(51) Int. Cl.⁴: **H 04 Q 11/04**

(30) Priorität: **24.11.83 DE 3342402**

(43) Veröffentlichungstag der Anmeldung:
**10.07.85 Patentblatt 85/28**

(84) Benannte Vertragsstaaten:
**AT BE CH DE IT LI NL**

(71) Anmelder: **International Standard Electric Corporation
320 Park Avenue
New York New York 10022(US)**

(84) Benannte Vertragsstaaten:
**BE CH IT LI NL AT**

(71) Anmelder: **Standard Elektrik Lorenz Aktiengesellschaft
Hellmuth-Hirth-Strasse 42
D-7000 Stuttgart 40(DE)**

(84) Benannte Vertragsstaaten:
**DE**

(72) Erfinder: **Endler, Joachim
Franklinstrasse 30
D-7000 Stuttgart 40(DE)**

(74) Vertreter: **Villinger, Bernhard, Dipl.-Ing. et al,
Standard Elektrik Lorenz AG Patent- und Lizenzwesen
Postfach 300 929 Kurze Strasse 8
D-7000 Stuttgart 30(DE)**

(54) **Koppelnetzanordnung für eine Zeitvielfachvermittlungsstelle.**

(57) Das Koppelnetz einer PCM-Vermittlungsstelle enthält zu Grundeinheiten zusammengefaßte Verbindungs- und Sprachspeicher. Die ankommenden digital codierten Sprachsignale werden zyklisch in den Sprachspeicher eingeschrieben und wahlfrei - durch einen Verbindungsspeicher gesteuert - ausgelesen.

Um das Koppelnetz modular erweitern zu können, ohne die Blockierfreiheit zu verlieren oder den Einschreibtakt erhöhen zu müssen, sind die Grundeinheiten (EKG) durch mehrere Sprachspeicher (SSMO, ..., SSMk) erweitert, von denen einer mit den an die jeweiligen Grundeinheiten (EKG) angeschlossenen kommenden PCM-Leitungen (PCMIN) verbunden ist, während die anderen Sprachspeicher mit den an jeweils eine der anderen Grundeinheiten angeschlossenen kommenden PCM-Leitungen verbunden sind. Beim Auslesen wird jeweils nur einer der Sprachspeicher durch den Verbindungsspeicher aktiviert.

./...

FIG.2

0147590

J.Endler -5

Koppelnetzanordnung für eine Zeitvielfachvermittlungsstelle

Die Erfindung betrifft eine Koppelnetzanordnung für eine Zeitvielfachvermittlungsstelle nach dem Oberbegriff von Patentanspruch 1.

Bei einer bekannten derartigen Koppelnetzanordnung sind die kommenden PCM-Leitungen an sämtliche Koppelnetz-Grundeinheiten angeschlossen, während jeweils nur ein Teil der abgehenden Leitungen an die einzelnen Grundeinheiten angeschlossen ist. In die Sprachspeicher der Grundeinheiten werden die ankommenden PCM-Wörter mit größerer Taktfrequenz eingeschrieben als ausgelesen (DE-PS 31 09 767).

Der Erfindung liegt die Aufgabe zugrunde, eine Koppelnetzanordnung der eingangs genannten Art zu schaffen, die sich mit geringem Bauteileaufwand modular erweitern läßt.

Diese Aufgabe wird erfindungsgemäß durch die in dem Patentanspruch 1 gekennzeichnete Koppelnetzanordnung gelöst.

Vorteilhafte Weiterbildungen der Erfindung sind in den Unteransprüchen gekennzeichnet.

ZT/P1-Bk/Bl
03.11.1983

J.Endler -5

Die Vorteile der Erfindung liegen insbesondere darin, daß auch dann, wenn aus der Koppelnetz-Grundeinheit modular ein größeres Koppelnetz abgebaut wird, dieses blockierungsfrei bleibt. Außerdem ist es nicht erforderlich,die Taktfrequenz beim Einschreiben der Information in die Speicherstellen des Sprachspeichers gegenüber der Taktfrequenz beim Auslesen zu erhöhen.

Ein Ausführungsbeispiel der Erfindung wird im folgenden anhand der Zeichnung erläutert. Es zeigen:

Figur 1     ein der Erläuterung der Funktion des Koppelnetzes einer Zeitvielfach-Fernmeldevermittlungsstelle dienendes Blockschaltbild einer Koppelnetz-Grundeinheit;

Figur 2     eine erweiterte Koppelnetz-Grundeinheit und

Figur 3     eine aus erweiterten Koppelnetz-Grundeinheiten nach Figur 2 aufgebaute Koppelnetzanordnung.

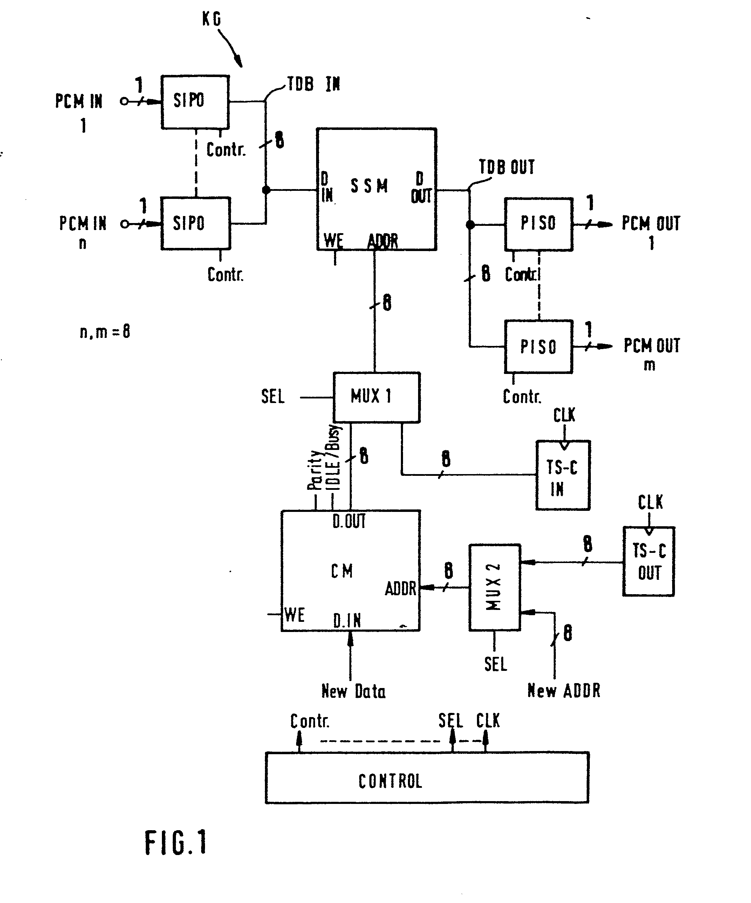

An eine Koppelnetz-Grundeinheit KG (Figur 1) sind n PCM-Leitungen PCMIN für ankommende Übertragungsrichtung angeschlossen. In leitungsindividuellen Seriell-Parallel-Wandlern SIPO werden die auf den einzelnen PCM-Leitungen seriell ankommenden Bits der PCM-Wörter in Parallelform umgewandlet. Die Wandler SIPO weisen demnach jeweils eine Eingangsleitung und acht Ausgangsleitungen auf. Durch diese Ausgangsleitungen, die einen acht Bit breiten Bus TDBIN bilden,sind die Ausgänge sämtlicher Wandler SIPO einerseits untereinander und andererseits mit dem Eingang eines Sprachprobenspeichers SSM verbunden. Die Parallelschaltung aller Ausgänge der Wandler SIPO ist möglich, weil diese Ausgänge in den Tri-State-Zustand geschaltet werden können.

J.Endler -5

Der Sprachprobenspeicher SSM weist so viele Speicherzellen
für jeweils ein PCM-Wort auf, wie PCM-Wörter während eines
Pulsrahmens über die kommenden PCM-Leitungen angeliefert
werden können. In dem Fall des Ausführungsbeispiels sind
dies 256 Speicherzellen zu jeweils acht Bits, insgesamt
also Speicherplatz für 2.048 Bits. Dies gilt für den Fall,
daß, wie dargestellt, bis zu acht kommende Leitungen für
die Übertragung nach dem System PCM 30/32 anschließbar
sein sollen. Es ist auch eine Verringerung der kommenden
und der gehenden PCM-Leitungen möglich, es muß dann aber
die Übertragungsgeschwindigkeit - wenn weiterhin 256 Speicherproben pro Rahmen übertragen werden sollen - auf den
einzelnen Leitungen erhöht werden, d.h. während eines
Pulsrahmens müssen mehr als 32 PCM-Wörter übertragen werden.

Die auf den Leitungen PCMIN ankommenden PCM-Wörter werden
zyklisch in den Sprachprobenspeicher SSM eingeschrieben,
wobei ein Zeitlagen- oder Zeitkanalzähler kommend TSCIN
die erforderlichen Ansteueradressen für die Speicherzellen des Sprachprobenspeichers SSM liefert.

Das Auslesen der PCM-Wörter aus dem Sprachprobenspeicher
SSM erfolgt im wahlfreien Zugriff. Ein Verbindungsspeicher
CM liefert dabei die erforderlichen Ansteueradressen, die
jeweils acht Adressenbits, ein Frei/Besetzt-Bit und ein
Paritätsbit umfassen. Der Verbindungsspeicher CM weist
somit 256 Speicherzellen für jeweils zehn Bits auf. Diese
Speicherzellen werden von einem Zeitlagenzähler gehend
TSCOUT zyklisch angesteuert und sie geben dabei über einen
Multiplexer MUX1 während eines Pulsrahmens 256 Adressen
an den Sprachprobenspeicher SSM ab .

J.Endler -5

Die aus dem Sprachprobenspeicher SSM ausgelesenen PCM-Wörter gelangen über einen Zeitvielfach-Bus TDBOUT gehend,
d.h. für abgehende Übertragungsrichtung, zu Parallel-
Seriell-Wandlern PISO, die die parallel eintreffenden PCM-
Wörter wieder in die serielle Form umwandeln und über abgehende PCM-Leitungen PCMOUT aussenden.

Das Einschreiben und Auslesen der PCM-Wörter in bzw. aus
dem Sprachprobenspeicher SSM wird abwechselnd vorgenommen.
Der Multiplexer MUX1 schaltet die jeweils benötigten
Adressen zum Sprachprobenspeicher SSM durch. Die Steuerung
CONTROL der Koppelnetzanordnung ist in Figur 1 nur angedeutet.

Das vorstehend erwähnte Frei/Besetzt-Bit dient dazu, in
nicht belegten Übertragungskanälen ein PCM-Ruhewort auszusenden, und das Paritätsbit dient der Überwachung des
Speicherinhaltes des Verbindungsspeichers CM.

Ein Multiplexer MUX2 wird dazu verwendet, die Adresse für
neue Daten an den Verbindungsspeicher CM anzulegen, wenn
neue Daten einzuschreiben sind.

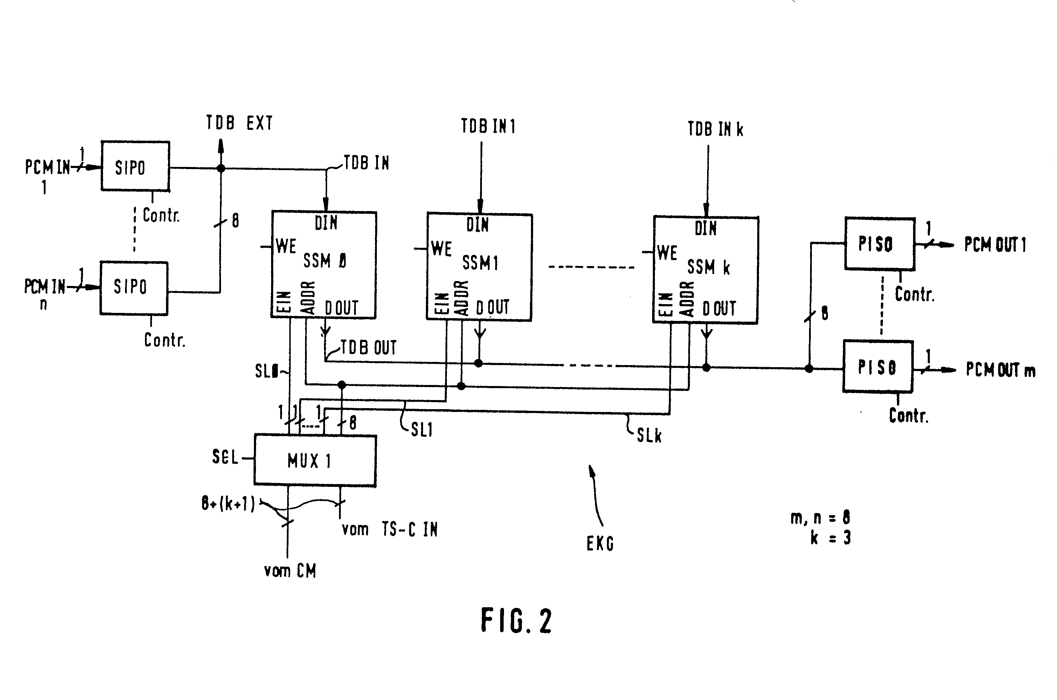

Eine erweiterte Koppelnetz-Grundeinheit EKG (Figur 2)
weist in dem Ausführungsbeispiel $0 \leq k \leq 3$, d.h. vier
Sprachprobenspeicher SSM0 bis SSMk, n = 8 kommende PCM-
Leitungen PCMIN und m = 8 gehende PCM-Leitungen PCMOUT
auf. Eine solche erweiterte Grundeinheit EKG ist für Koppelnetze mit 1.024 kommende und 1.024 gehende PCM-Wörter
vorgesehen.

Die Seriell-Parallel-Wandlung der auf den kommenden PCM-
Leitungen eintreffenden Sprachproben wird wie bei der
Koppelnetz-Grundeinheit KG nach Figur 1 erläutert durch-

J.Endler -5

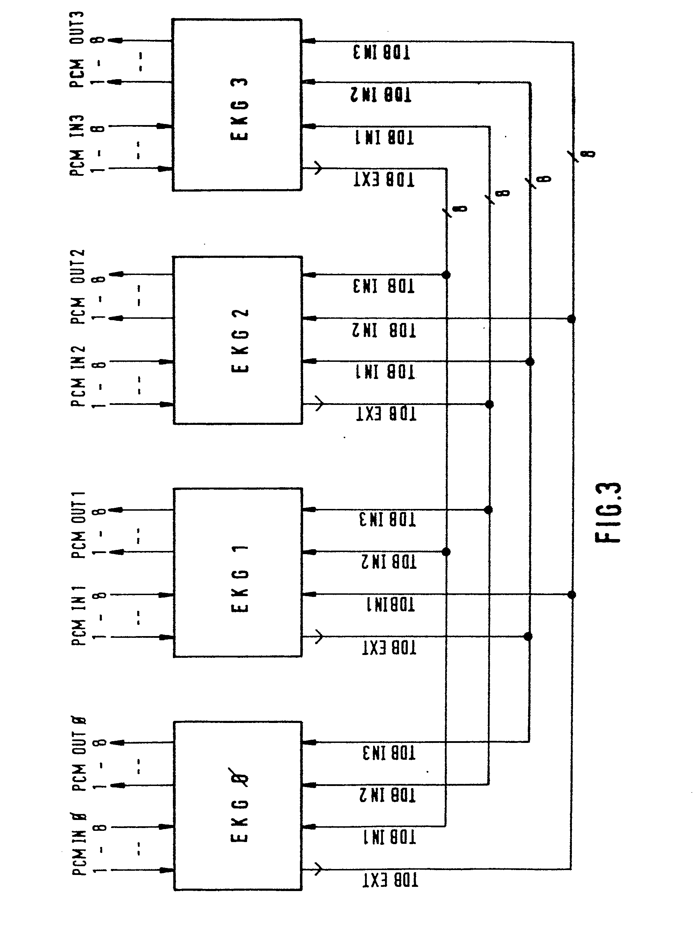

geführt. Die parallel vorliegenden PCM-Wörter werden zyklisch in den Sprachprobenspeicher SSMO der jeweiligen erweiterten Grundeinheit EKG eingeschrieben und zusätzlich über eine Leitung TDBEXT zu den anderen Koppelnetz-Grundeinheiten der erfindungsgemäßen Koppelnetzanordnung weitergeleitet. In jeder anderen erweiterten Grundeinheit werden die auf der Leitung TDBEXT ankommenden PCM-Wörtern ebenfalls zyklisch in einen der Sprachprobenspeicher SSM (1 - k) eingeschrieben. Dadurch stehen in den Sprachprobenspeichern jeder erweiterten Koppelnetz-Grundeinheit EKG die eigenen PCM-Wörter im Sprachprobenspeicher SSMO und die PCM-Wörter aller anderen erweiterten Grundeinheiten in den anderen Sprachprobenspeichern(1 - k) zur Verfügung. Die zum Auslesen erforderliche Auswahl des jeweiligen Sprachprobenspeichereiner erweiterten Koppelnetz-Grundeinheit wird in Verbindung mit Figur 3 erläutert.

Die erweiterte Koppelnetz-Grundeinheit EKG ergibt folgende Vorteile: Jede erweiterte Grundeinheit kann - wie die Koppelnetz-Grundeinheit KG nach Figur 1 - ebenfalls 256 kommende und 256 gehende PCM-Wörter verarbeiten, und sie kann außerdem unabhängig von den anderen erweiterten Grundeinheiten der Koppelnetzanordnung betrieben werden. Dadurch ist gewährleistet, daß sich die Koppelnetzanordnung problemlos modular erweitern läßt. Die Blockierungsfreiheit der Koppelnetz-Grundeinheit bleibt auch bei der Zusammenschaltung mehrerer erweiterter Grundeinheiten vorhanden. Das vergrößerte Koppelnetz bleibt einstufig, was geringe Verzögerungszeiten für die PCM-Wörter auf dem Übermittlungsweg ermöglicht. Außerdem ist die Ansteuerung des Koppelnetzes einfacher als bei mehrstufigen Anordnungen. Der zusätzliche Aufwand für die Erweiterung

J.Endler -5

der Koppelnetz-Grundeinheit ist gering. Schließlich muß die Verarbeitungsgeschwindigkeit auf dem internen Zeitvielfach-Bus der Koppelnetz-Grundeinheit nicht erhöht werden.

Aus Figur 3 ist die Zusammenschaltung von vier erweiterten Koppelnetz-Grundeinheiten zu einer erfindungsgemäßen Koppelnetzanordnung mit 1.024 Eingangskanälen und 1.024 Ausgangskanälen ersichtlich.

Bei der erfindungsgemäßen Koppelnetzanordnung wählt der Verbindungsspeicher jeder erweiterten Koppelnetz-Grundeinheit neben den schon erwähnten 256 Zellen jedes einzelnen Sprachprobenspeichers auch noch einen der Sprachprobenspeicher aus, aus dem ein PCM-Wort ausgelesen werden muß, da an ihn die gehende PCM-Leitung angeschlossen ist, auf der der Zeitvielfachkanal des empfangenden Teilnehmers übertragen wird. Die Auswahlsignale werden auf Signalleitungen SL0, SL1, ..., SLk übertragen.

Um jeweils einen Sprachprobenspeicher auswählen zu können, muß der Verbindungsspeicher um jeweils einige Bits pro Speicherzelle erweitert werden. In dem Ausführungsbeispiel mit $k = 3$, d.h. mit vier Sprachprobenspeicher pro erweiterter Koppelnetz-Grundeinheit, sind zwei zusätzliche Bits erforderlich, da mit zwei Bits eine Auswahl zwischen vier Sprachprobenspeichern getroffen werden kann.

Die Funktion einer erfindungsgemäßen Koppelnetzanordnung sei nun anhand eines Zahlenbeispiels erläutert, und zwar für eine einfach gerichtete Verbindung. Die Koppelnetzanordnung weise folgende Grundeinheiten und an diese angeschlossene·Teilnehmer auf.

J.Endler -5

|  | Teilnehmer |
|---|---|
| Erweiterte Koppelnetz-Grundeinheit 0: | 0 - 255 |
| erweiterte Koppelnetz-Grundeinheit 1: | 256 - 511 |
| erweiterte Koppelnetz-Grundeinheit 2: | 512 - 767 |
| erweiterte Koppelnetz-Grundeinheit 3: | 768 - 1.023. |

Es sei nun der Weg eines PCM-Wortes von dem Teilnehmer 55 zu dem Teilnehmer 700 beschrieben.

Das von dem Teilnehmer 55 ausgesendete PCM-Wort wird von der erweiterten Grundeinheit 0 empfangen und in folgenden Sprachprobenspeichern abgespeichert:

| erweiterte Koppelnetz-Grundeinheit 0: | SSM0 |
|---|---|
| erweiterte Koppelnetz-Grundeinheit 1: | SSM1 |
| erweiterte Koppelnetz-Grundeinheit 2: | SSM2 |
| erweiterte Koppelnetz-Grundeinheit 3: | SSM3. |

Da der Teilnehmer 700 an der erweiterten Koppelnetz-Grundeinheit 2 angeschlossen ist, wird der Verbindungsspeicher CM dieser Grundeinheit so eingestellt, daß er zu der abgehenden Zeitlage des Teilnehmers 700 die entsprechende Speicherzelle des Sprachprobenspeichers SSM2 adressiert. Das PCM-Wort des Teilnehmers 55, das über die Leitung TDBEXT der erweiterten Koppelnetz-Grundeinheit 0 in den Sprachprobenspeicher SSM2 der erweiterten Koppelnetz-Grundeinheit 2 eingeschrieben worden ist, wird nun über die abgehende PCM-Leitung der erweiterten Grundeinheit 2 zu dem Teilnehmer 700 ausgesandt. Damit ist die Verbindung hergestellt.

J.Endler -5

Patentansprüche

1. Koppelnetzanordnung für eine Zeitvielfachvermittlungsstelle, an die kommende und gehende Leitungen angeschlossen sind und in der kommende digital codierte Sprachsignale zyklisch in Sprachspeicher eingeschrieben und
- durch einen Verbindungsspeicher gesteuert - wahlfrei
aus ihnen ausgelesen und damit Verbindungen zwischen Teilnehmern durchgeschaltet werden, wobei die Sprach- und
Verbindungsspeicher zu Koppelnetz-Grundeinheiten zusammengefaßt sind, d a d u r c h g e k e n n -
z e i c h n e t , daß die Koppelnetz-Grundeinheiten (KG0,
..., KGk) durch mehrere Sprachspeicher (SSM0, SSM1, ...,
SSMk) erweitert sind, von denen einer (SSM1) eingangsseitig mit den an die erweiterte Grundeinheit (KG0) angeschlossenen kommenden Leitungen (PCMIN1, ..., PCMINn) verbunden ist, während die anderen Sprachspeicher (SSM1, ...,
SSMk) eingangsseitig mit den an jeweils eine der anderen
erweiterten Grundeinheiten (KG1, ..., KGk) angeschlossenen
kommenden Leitungen (PCMIN0, ..., PCMINn) verbunden sind,
und daß der Verbindungsspeicher (CM) zusätzliche Steuersignale abgibt, durch die jeweils einer der Sprachspeicher
(SSM0, ..., SSMk) zum Auslesen der Sprachsignale aktiviert
wird.

ZT/P1-Bk/Bl
03.11.1983

J.Endler -5

2. Koppelnetzanordnung nach Anspruch 1, dadurch gekennzeichnet, daß die erweitere Grundeinheit (KG0, ..., KGk) jeweils soviele Sprachspeicher (SSM0, ..., SSMk) aufweist, wie Grundeinheiten (KG0, ..., KGk) in der Koppelnetzanordnung vorhanden sind.

3. Koppelnetzanordnung nach Anspruch 1 oder 2, dadurch gekennzeichnet, daß der Verbindungsspeicher (CM) jeder erweiterten Grundeinheit (EKG) mit den Sprachprobenspeichern (SSM0, ..., SSMk) durch Signalleitungen (SL0, ..., SLk) verbunden ist, über die ein Auswahlsignal abgegeben wird, durch das derjenige Sprachprobenspeicher (SSM2) aktiviert wird, an den der empfangende Teilnehmer angeschlossen ist.

4 Koppelnetzanordnung nach einem der vorhergehenden Ansprüche, dadurch gekennzeichnet, daß die Ausgänge sämtlicher Seriell-Parallel-Wandler (SIPO) einer erweiterten Grundeinheit (EKG), an die die kommenden PCM-Leitungen angeschlossen sind, untereinander und mit dem Eingang eines Sprachprobenspeichers (SSM0) durch einen Zeitvielfach-Bus (TDBEXT) verbunden sind.

FIG.1

TDB EXT

PCM IN 1 → SIPO ... Contr.

TDB IN

PCM IN n → SIPO — Contr.

8

TDB IN 1

TDB IN k

DIN
WE  SSM 0
EIN  ADDR  D OUT

DIN
WE  SSM1
EIN  ADDR  D OUT

DIN
WE  SSM k
EIN  ADDR  D OUT

PISO → 1 → PCM OUT 1
Contr.

PISO → 1 → PCM OUT m
Contr.

TDB OUT

SL0

SL1

SLk

8

1   1   8

SEL — MUX 1

8+(k+1)

vom TS-C IN

vom CM

EKG

m, n = 8
k = 3

# FIG. 2

0147590

0147590

FIG.3